# EUROPEAN PATENT APPLICATION

(11) **EP 0 885 759 A1**
(43) Date of publication of application: **23.12.1998**
(21) Application number: 98110795.6
(22) Date of filing: 12.06.1998
(51) Int. Cl.: B60J 7/06

(54) **Adjustable length arch for support structure of industrial vehicles coverings**

(30) Priority: 13.06.1997 IT MI971407
(71) Applicant: Autocar S.p.A., 20129 Milan (IT)
(72) Inventor: Antonelli, Vincenzo Antonio, 20064 Gorgonzola, Milan (IT)
(74) Representative: Passini, Angelo

(57) **Abstract**

A transversal element (2) (also called "arch") which is part of the support structure of the covering of an industrial vehicle. The length of the arch (2) can be adjusted so that it fits the width of the vehicle to which the structure is intended to be applied. At least one end of the arch has a telescopic portion (3) which can be fixed to the remaining portion of the arch (2) by fixing screw means (8). Said means (8) are preferably of the removable type in order to reuse the arch (2) on industrial vehicles of a different type.

## Description

### Field of the invention

The invention relates to a transversal element (also called "arch") which is part of the support structure of the covering of an industrial vehicle. The length of the arch can be adjusted so that it fits the width of the vehicle to which the structure is intended to be applied.

In view of this aim, at least one end of the arch has a telescopic portion which can be fixed to the remaining portion of the arch by fixing screw means, preferably of removable type.

### Background art

A large number of industrial vehicles are well known, both traveling on tyre and on rail, in which the loading chamber is covered by a removable covering which normally comprises a structure which supports covering means consisting, for example, of a large piece of canvas.

The covering means are often made removable in order to make easier the access to the loading chamber. Also the support structure is often at least partially removable.

In particular, the transverse elements (or "arches") can be removed or they can slide along the longitudinal elements of the support structure to be put together at an extremity of the loading chamber.

The dimensions of the industrial vehicles, also whether they are part of the same "family" and are manufactured by the same Company, can be different the one by the others. For this reason it is impossible to manufacture the support structures of the coverings by joining prefabricated elements "stored" inside a store house.

Thus, a specific support structure has to be "tailored" for each vehicle and it can not be reused for an other vehicle, also of the same Company, without additional arrangements.

The arches are the most expensive elements of a support structure. The length of the arches is determined time by time depending of the width of the loading chamber of the vehicle to which the support structure is intended to be applied. In fact, at both the ends of each arch it is necessary to fix the connecting means of the arches to the support structure or to fix the sliding means of the same arches along the longitudinal elements of the support structure.

The longitudinal elements of the support structure can be made in an easier and less expensive manner by simply cutting section bars of the type which is commonly used in the market or manufactured on industrial scale, for example by extrusion.

Thus, at present it is necessary to vary from time by time the length of the arches of the support structure according to the width of the loading chamber to which the support structure is intended to be applied. This results in a long time and an expensive production of the support structure.

In order to at least partially overcome this problem, some arches have been produced the length of which can vary in a discontinuous manner. These arches comprise two or more parts which are reciprocally connected and fixed by pins (or equivalent means) which can be inserted in several holes of the two parts to be assembled.

The distance between two adjacent holes determines the minimum variation of length which is possible to be obtained. Bigger the distance between the holes, bigger the difficulty to fit the length of the arch with the width of the loading chamber of the particular vehicle to which the arch has to be applied. However, series of holes placed very close one to the other would strongly reduce the resistance of the structure to mechanical stresses.

Object of the invention is an arch the length of which can be continuously adjusted in a simple and non expensive way. The length of the present arches can vary inside prefixed ranges so that it is possible to manufacture them on industrial scale and to make them suitable to be applied at least to similar vehicles, possibly of the same manufacturer. The possibility of vary the length of the arches allows the user to easily adapt an arch to the particular width of the loading chamber of the vehicle to which the support structure comprising the same arch is intended to be applied.

Thus the arch of the invention overcomes the limits and the drawbacks of the arches which are used in the already known support structures.

### Summary of the invention

Object of the invention is an arch for support structures of the coverings of industrial vehicles. The arch has an adjustable length and comprises at least at one end a body having a section whose size is reduced in respect of that of the hollow body constituting the central portion of the arch. The reduced section body supports the connection means of the arch to the longitudinal elements of the support structure and it slides into the central portion of the arch where it is inserted with a telescopic arrangement. The reduced section body is fixed to the central portion of the arch by coupling means (which can be operated from the outside of the arch) which are suitable to continuously vary the length of the same arch.

Preferably, the coupling means are of the removable type.

### List of drawings

- fig.1 schematically shows a part of a support structure according to the invention;
- fig.2 shows a side view of an end of the arch of fig.1, partially sectioned in order to show the reduced section body and the blocking means;
- fig.3 shows an upper view of the reduced section body of fig.2;
- fig.4 shows an enlarged sectional view of the end zone of figure 2;
- fig.5 shows an enlarged view of the end zone of fig.2 comprising the fixing means;
- fig.6 shows an upper view of the plate-shaped body which is part of the fixing means.

In the drawings, the corresponding elements are identified by the same reference numbers.

### Detailed description of the invention

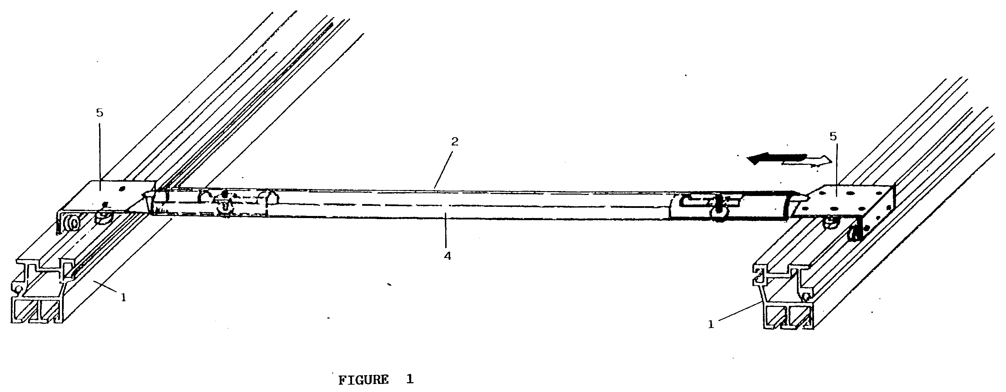

Figure 1 schematically shows a portion of a support structure according the invention. In the figure two longitudinal elements 1 are shown. Elements 1 are supported by a plurality of vertical rods (or by other equivalent supporting means, which are not shown in figure 1 for the sake of clarity and because they are unrelated with the present invention) to which one of the arches 2 according to the invention is connected (the arch will be better described in the following drawings).

Arches 2, together with the vertical rods and the longitudinal elements 1 constitute the support structure of the covering means.

From figure 1 can be noted that arch 2 comprises a central portion 4 at the ends of which means allowing the variation of the length of the arch (better shown in the following figures) are arranged. Arch 2 is connected to the longitudinal elements 1 by means 5 which are constituted, in the described embodiment, by a "L" shaped body carrying at least two couples of bearings, having orthogonal rotation axis, which connect one end of the arch 2 with one of the longitudinal elements 1.

Without going beyond the scope of the invention, the connecting means 5 can be constituted by plates or other equivalent means suitable to be rigidly fixed to the longitudinal elements 1 of the support structure.

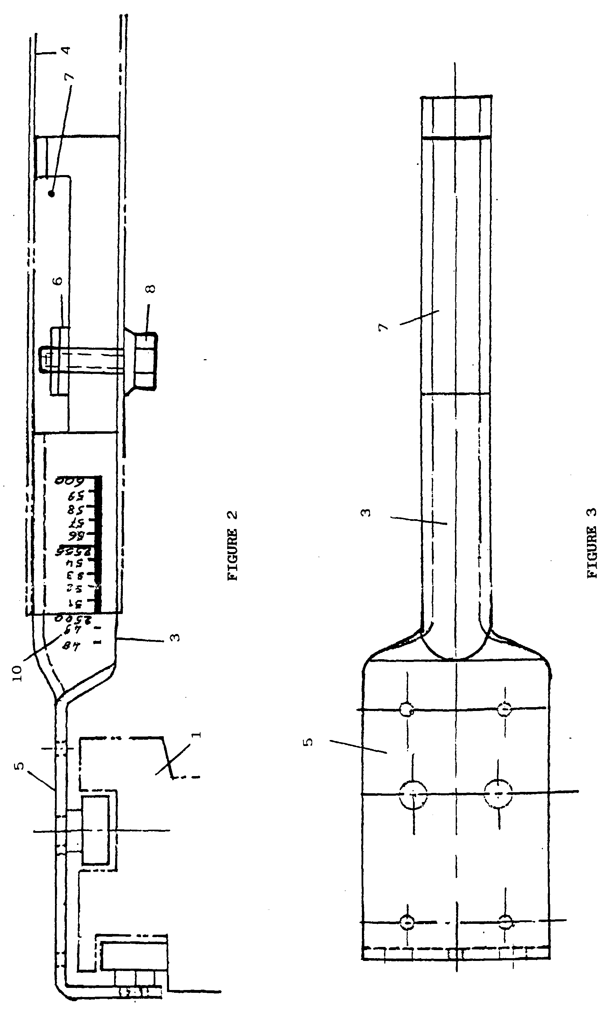

Figure 2 shows a partially sectioned side view of an end of the arch of figure 1.

Figure 2 also shows the body 3 having a section of reduced dimension in respect of the hollow body which constitutes the central portion 4 of the arch 2 and which supports the connecting means 5.

The reduced section body 3 is inserted into the central portion 4 of the arch 2 with a telescopic coupling. Body 3 can continuously slide inside the central portion 4, to which it is coupled by external coupling means.

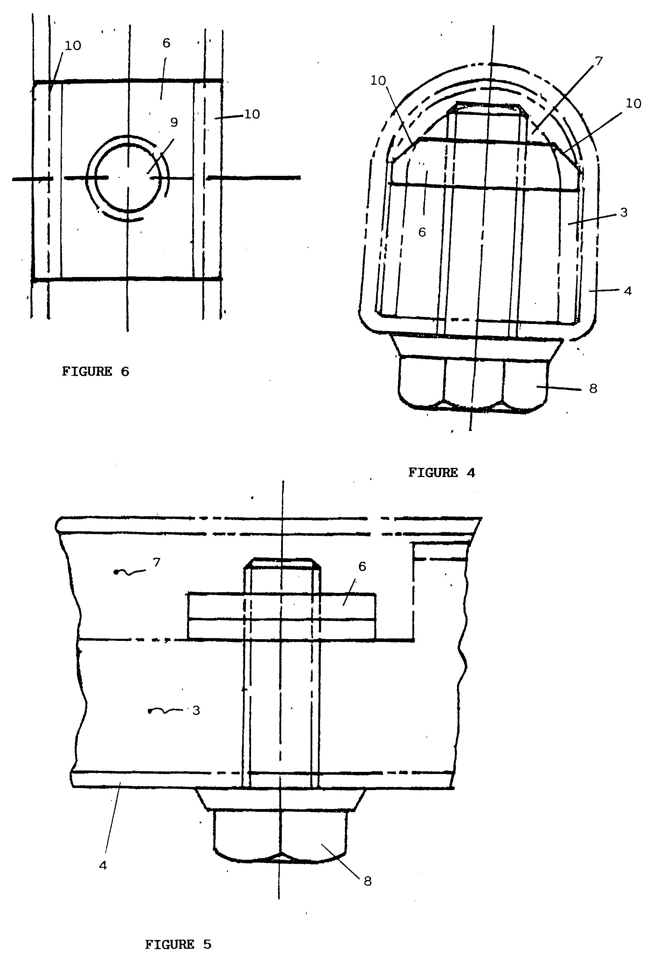

In particular, the reduced section body 3 presents a lowered zone 7 in which a plate-shaped body 6 is placed. The plate-shaped body 6 is part of the coupling means and presents a threatened hole 9 (see figure 6). The tightening screw 8 passes through an hole (not shown in the figures) made on the side wall on the central portion 4 of arch 2 and engages said threatened hole 9.

The length of the sliding of the reduced section body 3 of figure 2 in respect of the central portion 4 of arch 2 is substantially equivalent to the difference between the length of the lowered zone 7 and that of the plate-shaped body 6: preferably, the sliding is 65 mm and, in any cases, it is comprised between 55 and 75 mm.

In the embodiment described by the annexed drawings the reduced section body 3 and the central portion 4 of the arch 2 have a cross section with the shape of an upside down "U". This shape avoids that the covering canvas would be damaged by friction by body 3 and/or by central portion 4; however, other equivalent shapes can be used in order to accomplish with the possible requirements of the specific application.

In Figure 2 a vernier 10 is shown. The vernier is made on the reduced section body 3 and allows the user to determine, according to the accuracy of the vernier, the length of the zone of the reduced section body 3 which has to protrude from each of the ends of the central portion 4 in order to obtain an arch 2 having the length which is required by the specific support structure and to prepare, "out of work" and with the required accuracy, the other arches 2 which are part of the same support structure.

The lowered zone 7 reduces the resistance of the reduced section body 3 to the mechanical stresses and particularly to the bending stresses. To avoid any breaking risk on a steel-made reduced section body 3 having the thickness of approximately 4mm, the length of the lowered zone 7 is preferably equal to the 50% of the length of the zone of the reduced section body 3 which can be inserted in the central portion 4 of the arch 2 and, however, it is comprised between the 40% and the 60% of such length.

Obviously, these percentage values vary (or can vary) if the reduced section body 3 is made of a material different from steel and if its thickness is different from that indicated above.

Figure 3 shows a top view of the reduced section body 3: as can be noted from the figure, the "L" shaped body of the connecting means 5 presents a bigger section then body 3, in order to carry a large number of sliding rollers to obtain a better load distribution.

Figure 4 shows an enlarged sectional view of the end zone of figure 2. In figure 4 the reduced section body 3 is inserted into the central portion 4 of the arch 2 and the plate-shaped body 6, resting on the bottom of the lowered zone 7, is fixed to its seat by the blocking screw 8.

In order to allow the reduced section body 3 to slide in the central portion 4 of the arch 2, it is necessary (or at last very suitable) that the outline of the plate-shaped body 6 does not protrude from the outline of the reduced section body 3. In view of that the plate-shaped body 6 presents on its upper surface two chamfered zone 10.

Figure 5 shows an enlarged view of the end zone of figure 2 comprising the fixing means: in figure 5 the reduced section body 3, the lowered zone 7, the central portion 4 of the arch 2 and the plate-shaped body 6 are shown, the latter resting on the bottom of the lowered zone 7 and being fixed by the blocking screw 8 which passes through an hole made of the lateral wall of the central portion 4.

Figure 6 shows a top view of the plate-shaped body 6 of the fixing means. Figure shows the threatened hole 9, in which the blocking screw 8 is engaged, and the two chamfered zones 10.

The described adjustable length arch can be modified as suggested by day to day experience and by the evolution of the art without departing from the scope of the invention.

## Claims

1. Adjustable length arch for support structures of covering means of industrial vehicles, characterized in that it comprises, at at least one end, a body (3) having a section of reduced size in respect of that of an hollow body (4) constituting the central portion of said arch (2) and by the fact that said reduced section body (3) slides in said central portion (4) of said arch (2) to which it is fixed by coupling means which can be operated from the outside of said arch (2) and which are suitable to continuously vary the length of said arch (2).

2. Arch according to claim 1, characterized in that said coupling means are removable.

3. Arch according to claim 1, characterized in that said reduced section body (3) carries means (5) which are suitable to connect said arch (2) with longitudinal elements (1) of the support structure.

4. Arch according to claim 1, characterized in that the zone of said reduced section body (3) which is placed inside said central portion (4) of said arch (2) presents a lowered zone (7) and by the fact that said coupling means comprise a plate-shaped body (6) which is placed in said lowered zone (7) of said reduced section body (3) and presents a threatened hole (9) suitable to receive a blocking screw (8) inserted into a hole made on the lateral wall of said central portion (4) of said arch (2).

5. Arch according to claim 4, characterized in that the length of the sliding of said reduced section body (3) in respect of said central portion (4) of said arch (2) is comprised between 55 and 75 mm.

6. Arch according to claim 5, characterized in that the length of the sliding of said reduced section body (3) in respect of said central portion (4) of said arch (2) is approximately 65 mm.

7. Arch according to claim 4 wherein said reduced section body (3) is made of steel, characterized in that the length of said lowered zone (7) is comprised between 40% and 60% of the length of the zone of said reduced section body (3) which can be inserted in said central portion (4) of said arch (2).

8. Arch according to claim 7 characterized in that the length of said lowered zone (7) is approximately the 50% of the length of the zone of said reduced section body (3) which can be inserted in said central portion (4) of said arch (2).

9. Arch according to claim 1, which arch is part of said support structure of said covering means of a specific industrial vehicle, characterized in that a vernier (10) is realized on said reduced section body (3) in order to determine the length of the zone of the reduced section body (3) which protrudes from said central portion (4) of said arch (2).
